# EUROPEAN PATENT APPLICATION

(11) **EP 0 627 168 A1**
(43) Date of publication of application: **07.12.1994**
(21) Application number: 94201548.8
(22) Date of filing: 31.05.1994
(51) Int. Cl.: A22C 17/00

(54) **Device and apparatus for deboning halves of slaughtered animals**

(30) Priority: 01.06.1993 NL 9300937
(71) Applicant: STORK PROTECON-LANGEN B.V., NL-5349 AE Oss (NL)
(72) Inventor: Boeijen, Johannes Wilhelmus, NL-5346 SB Oss (NL); van Esbroeck, Maurice Eduardus Theodorus, NL-6681 AR Bemmel (NL)
(74) Representative: Hoorweg, Petrus Nicolaas

(57) **Abstract**

A device for removing small bone remnants (O) from pieces of meat, for instance halves (M) of slaughtered animals such as pigs, and an apparatus for deboning these halves, wherein the device is embodied with at least two members (10,11) for closing and opening respectively toward and away from each other, each of which is provided with a contour cutting edge (17) which in the closed position of the members lie close together in order to remove a bone remnant as accurately as possible from the half for deboning.

## Description

The invention relates to a device for removing small bone remnants from pieces of meat, for instance halves of slaughtered animals such as pigs, and to an apparatus for deboning these halves.

Such an apparatus is described in an earlier application no. 9100400 in the name of applicant, with which it is possible to subject a half of a slaughtered animal to successive operations for removal of the ribs, spine and other bone parts.

In the removal of the spine a saw-cut is made as closely as possible along the spine, wherein a bone remnant, that is, the protrusions of the vertebrae, remains behind in the meat. These bone parts or remnants, which are known as "meat eyes" in the relevant slaughtering art, must also be removed, for which purpose a proposal has been made for the use of a so-called hollow drill. Such a hollow drill operates inaccurately and does not remove the bone remnants sufficiently. Too much meat is also removed with such a device.

The invention has for its object to obviate the above stated drawbacks and proposes to this end a device which is distinguished in that it is embodied with at least two members for closing and opening respectively toward and away from each other, each of which is provided with a contour cutting edge which in the closed position of the members lie together.

Due to the use of members closing against each other the contour cutting edge related thereto can ensure that only the bone part is removed from the meat, wherein the severed bone part is held fast between the closed members so that a certain removal can take place.

In a preferred embodiment the members are of cup-shaped form, wherein the contour cutting edge is arranged on the free edge of the cup. With cup-shaped members one bone remnant at a time can thus be taken hold of in the hollow space between the cup-shaped members, wherein the cutting edges provide severing of the meat, membranes and sinews therearound, doing so as closely as possible to the bone remnant.

An exceptionally simple contour edge is obtained by grinding the edge of each cup-shaped member in facet form, whereby the bone surface is followed well and a good separation is achieved between bone and meat material.

According to one embodiment the facet grinding on the one cup can herein face outward and that on the other cup can face inward, wherein the cutting edge of the inward facing facet grinding falls inside the cup-shaped space of the one member. A sort of shearing movement is effected herewith which ensures a certain severing of sinews and similar tough material.

The or each member can he embodied with bone removing means.

Above mentioned and other features will be further elucidated in the figure description hereinbelow of a number of embodiments. In the drawing:
fig. 1 shows a view of a half of a slaughtered animal from which the bones respectively bone remnants must be removed;
fig. 2 and 3 are each standing sections, shown schematically, of possible operations during removal of the bones from a half;
fig. 4 is a top view of a device for removing bone remnants;
fig. 5 shows another embodiment of the device of fig. 4;
fig. 6 is a cross section along the line VI-VI of the members of fig. 5, in this case however of a hand-operated device;
fig. 7 shows a third variant of the device for removing bone remnants according to the invention.

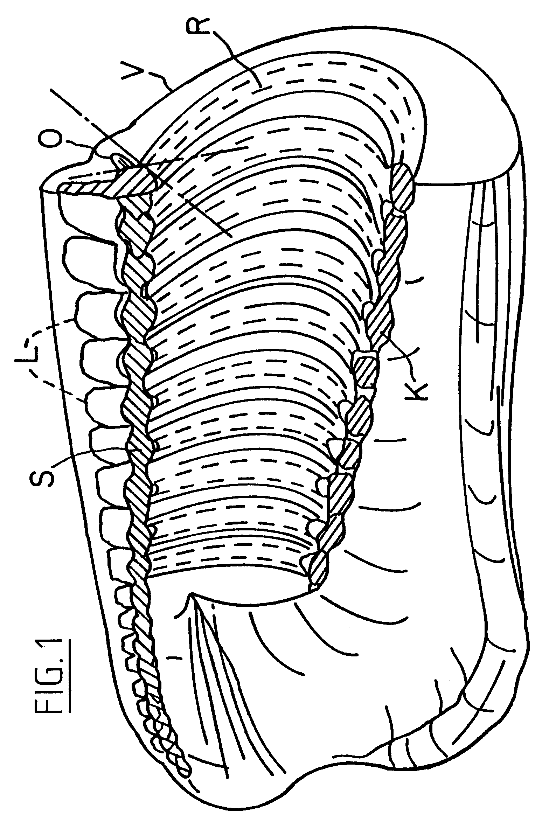

Shown schematically in perspective in fig. 1 is a half of a slaughtered animal in which a half spine S is still located with ribs R joined thereto which end at the cartilage K on the side remote from the spine. One of the operations for removing the ribs respectively the spine is making a cut along the spine, wherein the vertebrae forming the spine are sawn partially through. Then left behind in the meat is a bone remnant O which must later be removed.

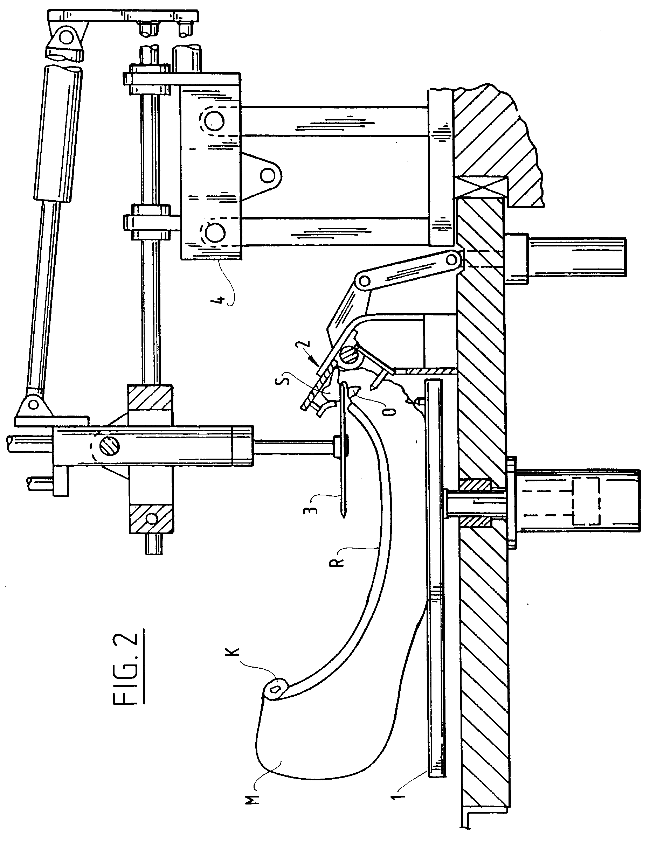

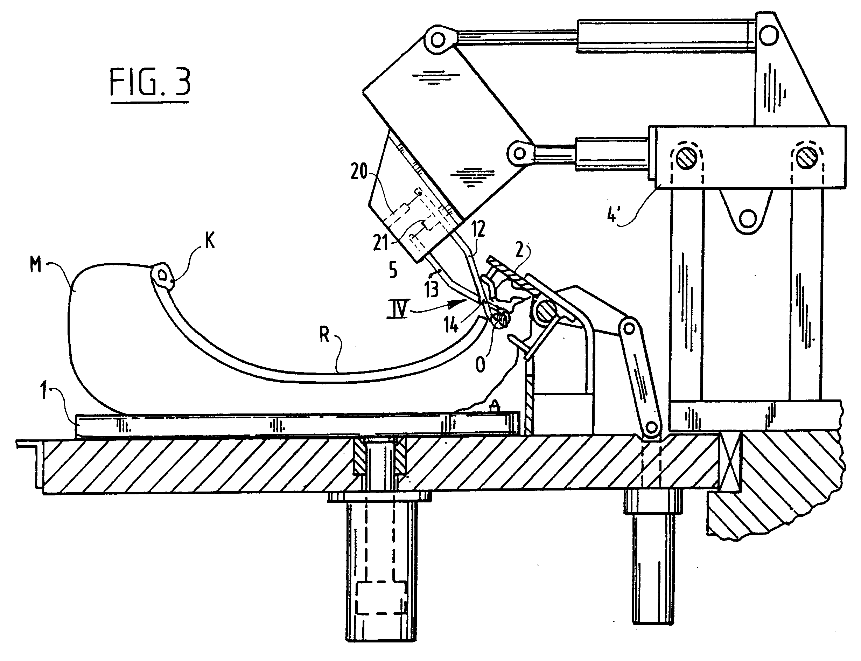

Fig. 2 and 3 show in standing cross section a possible apparatus wherein only those members are shown with which a saw-cut can be made and with which a bone remnant O can be removed. The mechanism shown in fig. 2 and 3 has already been described in an earlier application and is herein assumed known. This apparatus comprises a table 1 with a clamping mechanism 2 on which the half is laid and fixedly clamped at the spine S. The operation of table 1 and clamp 2 falls outside the scope of the present invention and is not further described. It is assumed that a saw-cut can be arranged in the half close to the spine S with a circular saw 3 which can be set into rotation by a motor (not shown) and which is supported in a carrier 4 which can be moved along table 1 in a direction at right angles to the plane of the drawing. As stated above, a bone remnant O herein remains behind.

Fig. 3 shows the same apparatus of fig. 2, wherein however the carrier 4 is replaced by another carrier 4', on which the device 5 for removing the eye O is shown schematically.

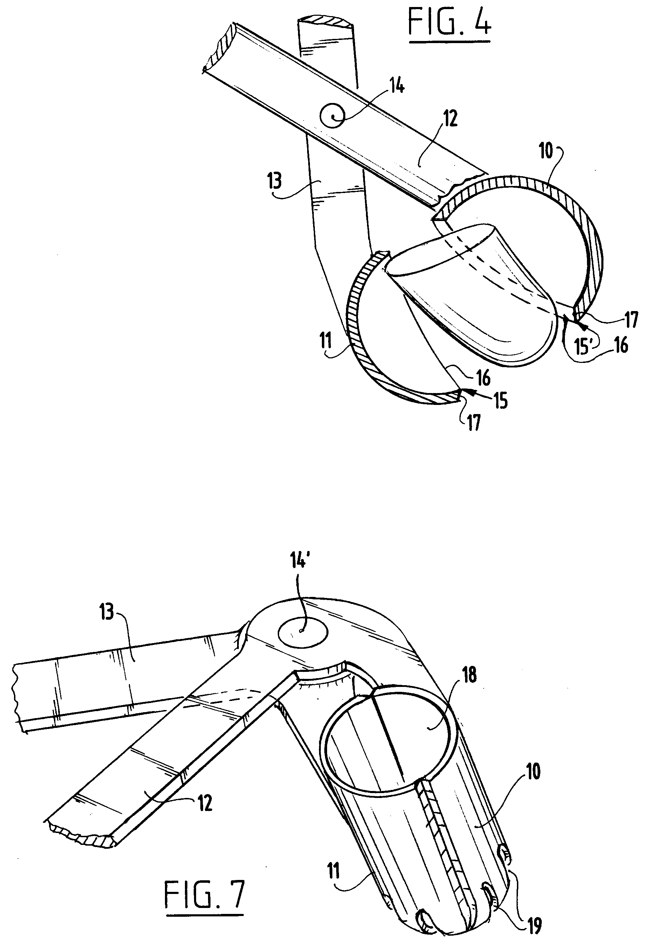

This device 5 is shown in different variants in figures 4-7.

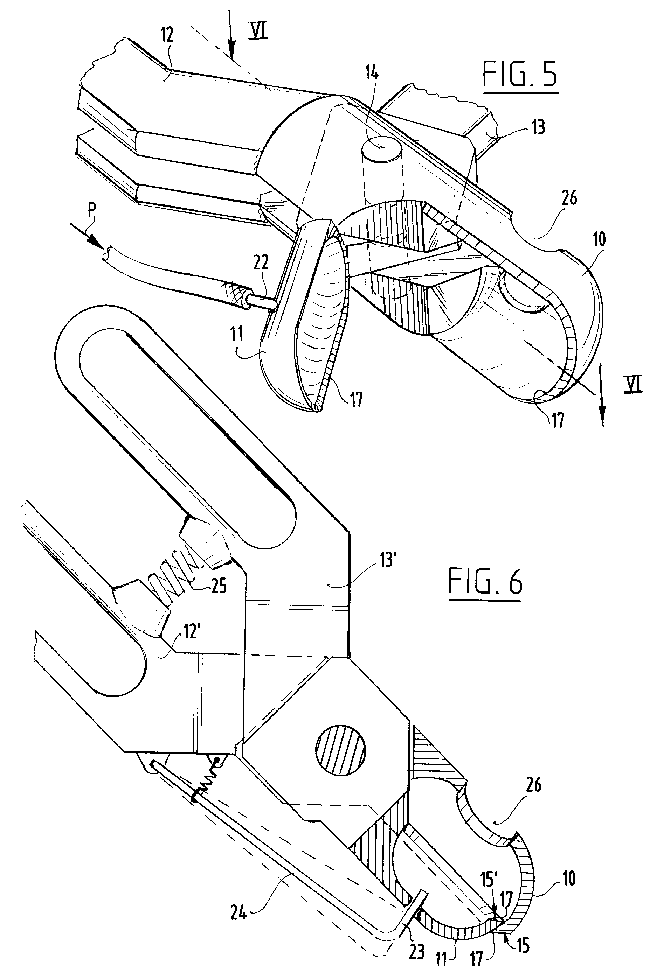

The device consists of two members 10, 11 respectively which can be carried from an open position in fig. 4 to a closed position, for instance fig. 6 and fig. 7. For this purpose the members 10, 11 are arranged on two arms 12 and 13 which can pivot relative to each other round a hinge pin 14.

Each member 11 has a cup-like shape, wherein the free edge 15 can be embodied wholly or partially as a cutting edge 16 which is formed by grinding a faceted surface 17 along this edge 15. The free edges 15 respectively 15' of the one and the other member are such that they can co-act with each other and can sever the meat or other material round the bone remnant O. The total space in the closed position of both cup-like members is herein such that this bone remnant can be wholly contained therein.

Opening and closing of the two members 10 and 11 away from and toward each other can be carried out in random manner. One possibility is shown in fig. 3 by lengthening the arms 12 and 13 beyond the point of rotation 14 and connecting the ends of the arms to cylinders 20, 21 respectively which can be energized by a random machine operation. Locating of the position of bone remnant O in the half M and placing the members 10 and 11 thereon close to this bone remnant O can take place manually, semi-automatically or fully automatically using locating and detecting sensors (not shown).

It will be apparent that when the members 10, 11 are placed in the opened position close to bone piece O and subsequently penetrate into the half, the cutting edges 16 close to the bone piece O already cut through or push back meat or other material, so that when the members 10, 11 are closed the piece of bone O can be wholly contained. The rest of the meat or other material joined thereto is then cut off by the cutting edges 16 along the edge of the cup-like members 10, 11.

The embodiment of fig. 5 and 6 is a variant of the embodiment according to fig. 4, wherein the cup-shaped members 10 and 11 are elongate. In addition only a part of the peripheral edge 15 of the cup-shaped member is herein provided with a faceted surface 17, which for the one member 10 is directed outward and for the other member 11 is directed inward, see also fig. 6. The peripheral edge 15 of the other member is moreover smaller than that of the one member 10, so that in the closed position of the members the peripheral edge 15', see fig. 6, falls inside the space of the cup-shaped member 10. It can be seen clearly in fig. 6 that a shearing action is brought about here, which guarantees a certain severing of tough material.

It is noted that the members are extended beyond the hinge pin with arms 12' and 13' which are embodied as handles. A manually operated device is thus obtained. An opening pressure spring 25 can optionally be arranged between the handles. It is further noted that member 10 in fig. 5 and 6 is provided with a passage opening 26 to remove cut out bone remnants from the closed cups without the cup-shaped members having to be opened. For forced removal of the bone remnants a spray nozzle 22 can be arranged in the other or the same member, which spray nozzle 22 is connected to a pressure source P.

In fig. 6 the spray nozzle can be replaced by a pressing pin 23 which is for instance manually operated, for which purpose the pin 23 is fixed to the end of a flexible or spring-loaded rod 24. This can be pressed with the finger to press the pin 23 via an aperture into the cup.

The operation of the embodiment according to fig. 5 and 6 is the same as that described with reference to fig. 4.

A third variant of the cup-shaped members is shown in fig. 7. The cup-shaped members are such in this embodiment that it is open on the top side 18. The form of the cup-shaped members 10, 11 is such that in the closed position a cylinder-like form is obtained which closes on the underside in a spherical shape. The underside is provided at 19 with apertures in order to facilitate penetration into the meat around the piece of bone remnant.

It is further noted that the rotation shaft 14' in this embodiment runs parallel to the centre line of the cylinder shape when the members are closed.

The operation of this variant is otherwise the same as that described with reference to fig. 4.

The invention is not limited to the above described embodiments which can be arranged in an apparatus for deboning halves. A hand-operated device also falls within the scope of the invention.

## Claims

1. Device for removing small bone remnants from pieces of meat, for instance halves of slaughtered animals such as pigs, and an apparatus for deboning these halves, **characterized in that** the device is embodied with at least two members for closing and opening respectively toward and away from each other, each of which is provided with a contour cutting edge which in the closed position of the members lie close together.

2. Device as claimed in claim 1, **characterized in that** each of the members has a cup-shaped form, wherein the contour cutting edge is arranged on the free edge of the cup.

3. Device as claimed in claim 2, **characterized in that** the cutting edge is formed by a facet grinding of the cup edge.

4. Device as claimed in claim 3, **characterized in that** the facet grinding on the edge of the one cup-shaped member is directed outward and that of the other member is directed inward, wherein the cup edge of the other member falls inside the cup-shaped space of the one member.

5. Device as claimed in any of the foregoing claims, **characterized in that** the members are arranged for rotation relative of each other round a hinge pin.

6. Device as claimed in claim 5, **characterized in that** at least one of the members are extended beyond the hinge pin with a handle to form a hand-operated tool.

7. Device as claimed in any of the foregoing claims, **characterized in that** at least one of the cup-shaped members is provided with a passage opening for the removed bone part.

8. Device as claimed in any of the foregoing claims, **characterized in that** a bone removing means is arranged in at least one of the other members.

9. Apparatus for deboning halves of slaughtered animals provided with a device as claimed in any of the foregoing claims.

10. A cup-shaped element suitable for use in a device according to one of the previous claims 1-8, and provided with a contour cutting edge.
